# EUROPÄISCHE PATENTANMELDUNG

(11) **EP 2 011 642 A2**
(43) Veröffentlichungstag der Anmeldung: **07.01.2009**
(21) Anmeldenummer: 08158347.8
(22) Anmeldetag: 16.06.2008
(51) Int. Cl.: B32B 38/14

(54) **Kaschiertes Druckprodukt und Verfahren zur Herstellung desselben**

(30) Priorität: 04.07.2007 DE 102007031051
(71) Anmelder: manroland AG, 63075 Offenbach/Main (DE)
(72) Erfinder: Walther, Thomas, 63067 Offenbach (DE); Werber, Edgar, 63075 Offenbach (DE); Schölzig, Jürgen, 55126 Mainz (DE); Augsberg, Gerhard, 63500 Seligenstadt (DE); Gensheimer, Valentin, 63165 Mühlheim (DE); Klingler, Horst, 63165 Mühlheim (DE); Mohn, Karlheinz, 63505 Langenselbold (DE); Schild, Helmut, 61449 Steinbach/Ts. (DE); Stahl, Dietmar, 63179 Obertshausen (DE)

(57) **Zusammenfassung**

Die Erfindung betrifft ein Verfahren zur Herstellung eines Druckproduktes und das Druckprodukt. Dieses besteht aus mindestens einem bogenförmigen Trägermaterial, zum Beispiel einem Papier-, Karton- oder Kunststofffolienbogen, mindestens einer Bildschicht und einer großflächig auf einer Seite des Trägermaterials kaschierten oder laminierten geschlossenen Folienlage.

Zur schnelleren Herstellung ist vorgesehen, dass das Trägermaterial als Bogen einer Bogenrotationsdruckmaschine zugeführt wird. Der Kaschiervorgang erfolgt in der Bogendruckmaschine, ebenso wie Druckvorgänge in den Druckwerken während eines Durchlaufs durch die Druckmaschine inline. Das Kaschiermaterial wird als Bahnmaterial und vor oder nach dem Kaschieren durch eine Trennvorrichtung auf das Format des Trägermaterials gebracht. Am Ausleger der Druckmaschine wird das fertige Verbundmaterial ausgelegt.

## Beschreibung

Die Erfindung betrifft kaschierte oder laminierte Druckprodukte und Verfahren zur Herstellung solcher Druckprodukte nach dem Oberbegriff von Anspruch 1 und Anspruch.

In der EP 0 569 520 B1 ist ein Kaltfolientransferverfahren für den Einsatz in Druckmaschinen offenbart. Dabei ist eine Bogenverarbeitende Druckmaschine gezeigt, die einen Anleger und einen Ausleger aufweist, wobei zwischen beiden Aggregaten Druckwerke und Beschichtungswerke angeordnet sind. In wenigstem einem der Druckwerke wird ein Klebstoffmuster mittels des Flachdruckverfahrens aufgetragen. Dieses Klebstoffmuster ist in einem kalten Druckverfahren aufgebracht und weist ein bestimmtes Bild gebendes Sujet auf. In dem Druckwerk folgenden Beschichtungswerk mit einem Gegendruckzylinder und einer Presswalze ist eine Folienführung vorgesehen. Diese ist in der Art konzipiert, dass von der Folienvorratsrolle ein Folienstreifen bzw. eine Transferfolie durch den Druckspalt zwischen dem Gegendruckzylinder und Presswalze geführt wird. Beim Transport der Bogen durch das Druckwerk wird jeder Bogen mit einem Klebstoffmuster versehen. Danach wird der Druckbogen durch das Beschichtungswerk geführt, wobei mittels der Presswalze der auf dem Gegendruckzylinder aufliegende Druckbogen mit dem Folienmaterial in Verbindung gebracht wird. Dabei geht die nach unten liegende, meist metallische Schicht eine enge Verbindung mit den mit Klebstoff versehenen Bereichen ein. Nach dem Weitertransport des Druckbogens haftet die transferierte Schicht lediglich im Bereich der mit Klebstoff versehenen Muster an. Der Trägerfolie wird also nur die Transferschicht im Bereich der Klebstoffmuster entnommen. Die auf diese Weise verbrauchte Transferfolie wird wieder aufgewickelt. Es ist bekannt derartige Beschichtungswerke beispielsweise in Druckwerken von Druckmaschinen einzusetzen. Es ist auch bekannt als Presswalze beispielsweise den Gummizylinder oder Druckzylinder eines Druckwerkes einzusetzen.

Mit einer solchen Kaltfolientransferanlage lassen sich nur relativ dünne Schichten bis zu einigen Mikrometer auf einen Bedruckstoff übertragen. Diese Schichten werden von der Transferfolie durch den Kleber, der sich auf dem Bedruckstoff befindet, abgelöst und auf den Druckbogen übertragen. Der Übertrag oder Transfer erfolgt stückweise, so dass die transferierte Schicht nicht vollständig geschlossen auf dem Druckbogen aufliegt. Diese Schicht kann auch Mikrorisse aufweisen, die den visuellen Eindruck nicht stören, aber den transferierten Film auf den Druckbogen unterbrechen. Auch ist der transferierte Film unterbrochen, wenn der durch das vorangegangene Druckwerk aufgetragene Klebstoff Störungen, zum Beispiel durch Papierpartikel, auch Butzenbildung genannt, aufweist. Die dünne Schichtdicke und die aufgelisteten Störungen und Unterbrechungen eines im Kaltfolientransferverfahren übertragenen Films lassen die Eignung eines solches Films für Anwendungen, bei denen Barriereeigenschaften, wie zum Beispiel Wasserdampfundurchlässigkeit oder eine Feuchtigkeitssperre gefordert ist, nicht zu. Schon sehr kleine, frei liegende Fasern aus der Papieroberfläche wirken wie ein Docht, der Feuchtigkeit oder andere flüssige Stoffe in das Innere des Bedruckstoffmaterials saugt.

Es ist ebenfalls bekannt in einer Bogenkaschiermaschine bedruckte Druckbögen mit einem geschlossenen Film eines Kunststoffmaterials zu beschichten. Dabei wird in der Regel von einer Rolle ein Strom von einzelnen Druckbögen mit einem durchgehenden Film laminiert, wobei nach dem Laminieren die einzelnen Bögen wieder durch eine Trenntechnik wieder separiert werden. Die Trennung kann durch Schwächung des Films an den Stoßstellen zwischen den einzelnen Bögen geschehen, indem der Film abgerissen wird. Es sind aber auch Lösungen bekannt, bei denen der Film durchgeschnitten wird.

Gattungsgemäße Vertreter solcher Bogenkaschieranlagen ist unterer anderem in den Patentschriften DE 198 17 835 C2, DE 44 12 091 A1, DE 43 36 835 C1 und DE-PS 1 194 562 aufgeführt.

Mit derartigen durchgehenden Kaschierungen lassen sich hohe Glanzwerte, aber auch Barriereeigenschaften erzielen. Ein mit einem Kunststofffilm beschichteter bedruckter Karton kann zum Beispiel dann als Außenwerbung genutzt werden. Auch sind Beschichtungen solche Art oftmals gefordert für die Anwendung in Tiefkühlverpackung als Feuchtigkeitssperrschicht oder als Verpackung von aggressiven Fetten als Fettsperrschicht, die zum Beispiel für die Verpackung fetthaltiger Tierfutter erforderlich ist.

Dieser Art kaschierte Schichten können auch dekorative Zwecke erfüllen, z. B. als Metallicbeschichtung oder Effekt und Sicherheitsbeschichtung (z. B. eine mit Hologrammen versehene Folie). Die kaschierte Schicht kann auch als Verstärkung des Trägermaterials hinzugefügt werden, um zum Beispiel die Reißfestigkeit einer Verpackung zu erhöhen.

Aufgabe der Erfindung ist, kaschierte Druckprodukte mit besonderen Eigenschaftsprofilen zu schaffen und Verfahren zur Herstellung solcher Druckprodukte zu beschreiben. Wünschenswert ist unter anderem ebenfalls, dass die Druckprodukte innerhalb eines Arbeitsganges bei dem Durchlauf durch die Druckmaschine hergestellt werden.

Die Lösung der Aufgabe gestaltet sich in einem Verfahren mit den Merkmalen des Anspruchs 1 und einem Druckprodukt mit den Merkmalen des Anspruchs 12.

Vorteilhafte Ausgestaltungen ergeben sich aus den Unteransprüchen.

Das erfindungsgemäße Produkt besteht aus mindestens drei Lagen: Einer Trägerlage, zum Beispiel ein Papier- ,Karton- oder Folienbogen, einer bildmäßig aufgebauten dekorativen Druckfarbenschicht, die zum Beispiel im Offset- und/oder Flexodruckverfahren auf einer der anderen Lagen aufgedruckt wurde, und einer zweiten, kaschierten Lage, die zum Beispiel aus einer Kunststofffolie, aus einer Metallfolie oder einem weiteren Papierlage bestehen kann.

Die Folie wird als geschlossener Film auf den Druckbogen appliziert, indem die Folie von einer Vorratsrolle abgewickelt und dann im Pressspalt zwischen einer Presswalze und dem Gegendruckzylinder auf den Druckbogen, der sich auf dem Gegendruckzylinder aufliegt, aufgebügelt wird. Nach Erreichen der benötigten Abschnittslänge wird die Folie abgerissen oder abgeschnitten.

Erfindungsgemäß verbleibt der gesamte Film auf dem Bedruckstoff und wird so mit dem Druckbogen weitertransportiert. Es verbleibt keine Trägerfolie als Rest, die, wie im Kaltfolientransferverfahren, wieder aufgewickelt werden müsste.

Das Herstellungsverfahren ist so gestaltet, dass die drei Lagen Trägermaterial, Kaschierlage und Druckbild in einem Durchgang durch eine Bogenrotationsdruckmaschine hergestellt und miteinander verbunden werden. Dabei wird das Trägermaterial über einen Anleger der Druckmaschine zugeführt. Die kaschierte Lage wird in der Druckmaschine mit dem Trägermaterial unter Druck und mit und ohne Einsatz einer Haftvermittlerschicht verbunden. Die Folie oder Papierbahn zur Herstellung der kaschierten Lage wird von einer Rolle abgerollt, einem Pressspalt innerhalb der Druckmaschine zugeführt. Dort werden die kaschierte Lage und das Trägermaterial und gegebenenfalls die Druckfarbenschicht unter Druckeinwirkung miteinander verbunden. Dabei kann von der Rolle mit der Kaschierfolie oder der Papierbahn ein Bogen mit dem durch den Pressspalt geführten Trägerbogen verbunden werden, indem nach Erreichen des Bogenendes die Bahn der Kaschierfolie oder die Papierbahn, die zur Bildung der kaschierten Lage dient, auf Format beschnitten wird. Alternativ kann die Kaschierfolie oder die Papierbahn erst auf Format beschnitten werden und dann mit dem Trägerbogen verbunden werden.

Im Folgenden wird die Erfindung anhand von Zeichnungen beispielhaft dargestellt. Hierbei zeigen
- Figur 1: ein nach einer ersten erfindungsgemäßen Verfahrensweise hergestelltes Druckprodukt
- Figur 2: ein nach einer zweiten erfindungsgemäßen Verfahrensweise hergestelltes innseitig geschütztes Druckprodukt
- Figur 3: ein nach einer dritten erfindungsgemäßen Verfahrensweise hergestelltes veredeltes Druckprodukt
- Figur 4: ein weiteres nach der dritten erfindungsgemäßen Verfahrensweise hergestelltes Druckprodukt

Kennzeichnend für die Erfindung ist, dass alle drei Lagen des herzustellenden Druckproduktes in einem Durchgang durch Druckmaschine, hier vorzugsweise eine Bogenrotationsdruckmaschine, hergestellt und miteinander verbunden werden.

Der Ablauf gestaltet sich wie folgt:
1. Dabei wird das Trägermaterial 2 über einen Bogenanleger der Druckmaschine zugeführt, wobei die kaschierte Lage 1 in der Druckmaschine mit dem Trägermaterial 2 unter Druck mit und ohne Einsatz einer Haftvermittlerschicht verbunden wird.
2. Hierzu wird die Folie oder die Papierbahn zur Herstellung der kaschierten Lage 1 von einer Rolle abgerollt, einem Pressspalt innerhalb der Druckmaschine zugeführt, indem die kaschierte Lage 1 und das Trägermaterial 2 und gegebenenfalls die Druckfarbenschicht 3 unter Druckeinwirkung miteinander verbunden werden.
3. Dabei kann von der Rolle mit der Kaschierfolie oder der Papierbahn ein Bahn mit dem durch den Pressspalt geführten Trägerbogen 2 verbunden werden, wobei nach Erreichen des Bogenendes die Bahn mit der Kaschierfolie oder die zugeführte Papierbahn, die zur Bildung der kaschierten Lage 1 dient, auf Format beschnitten wird.
4. Alternativ kann die Kaschierfolie oder die Papierbahn erst auf Format beschnitten werden und dann mit dem Trägerbogen verbunden werden.

Die kaschierte Schicht 1 kann eine Kunststofffolie, eine Metallfolie oder eine Papierlage sein. Als Kunststofffolien kommen glänzende, matte oder in einer anderen Form veredelte oder strukturierte Folien, zum Beispiel aus Zellulose-Hydrat, Zellulose-Acetat, Polyvinylchlorid, Polyethylen, Polypropylen oder anderen geeigneten Kunststoffmaterialien, eingesetzt werden. Die Kunststofffolien können auch Verbundmaterialien aus zwei verschiedenen Kunststoffmaterialien oder Verbundmaterialien aus einem Kunststoff- und einer Metallschicht sein. Die Kunststofffolien können mit einer Metallschicht bedampft oder in einer anderen geeigneten Weise beaufschlagt sein. Die Kunststofffolien können eingefärbt, mit einer Farbschicht beschichtet sein oder eine Effektlackschicht, zum Beispiel eine Mattlackschicht, tragen. Die Kunststofffolien können geprägt sein oder eine optisch wirkende Interferenzschicht aufweisen. Die Kunststofffolie hat dabei vorzugsweise funktionale Eigenschaften, die die Eigenschaften des Druckproduktes verbessern. Funktionale Eigenschaften können Barriereeigenschaften, wie zum Beispiel eine hohe Fettdichte, eine Wasserdampf- oder Feuchtesperre, eine Migrationssperre für Druckfarbenbestandteile sein. Durch die Kaschierfolie können aber auch optische Effekte, wie zum Beispiel ein Hochglanz, Mattglanz, Hologramm- oder 3-D-Effekte oder andere Lupeneffekte erzeugt werden. Die Kaschierfolien können auch mit einem Motiv, einer Struktur oder einem anders gearteten Muster bedruckt sein.

Als reine Metallfolienkaschierfolie kommen in erster Linie dünne Aluminiumfolien in Betracht, die als reine Aluminiumfolie silbrig erscheinen, aber durch farbige Beschichtungen auch andere Metalleffekte, zum Beispiel eine goldfarbene Metallfolie ermöglichen. Prinzipiell lassen sich aber auch andere Metalle als Basismaterial denken. Die Metallfolie ist vorzugsweise mit einer Beschichtung versehen, die die Oxidation des Metalls verhindert. Die Metallfolie kann ebenfalls mit einem Motiv bedruckt oder strukturiert sein. Die Metallfolie kann durch mechanische Prägung, zum Beispiel zu Erzeugung eines Matteffektes, in ihren Oberflächeneigenschaften verändert worden sein.

Die Stärke der Folien-, Verbundfolien-, Effektfolien- und Metallkaschierfolien liegt vorzugsweise < 50µm, in besonders bevorzugter Weise < 30µm.

Die Kaschierlage kann auch eine Papierlage sein, die vorzugsweise nur einseitig gestrichen ist. Durch das Kaschieren von Papierlagen lassen sich die Oberflächeneigenschaften des Trägermaterials verbessern. Ungestrichener oder gering gestrichener Karton lässt sich beispielsweise auf diesem Weg durch die Kaschierung einer Papierlage in einen hochwertigen Karton veredeln.

Im Folgenden werden verschiedene Anwendungsbeispiele erläutert.

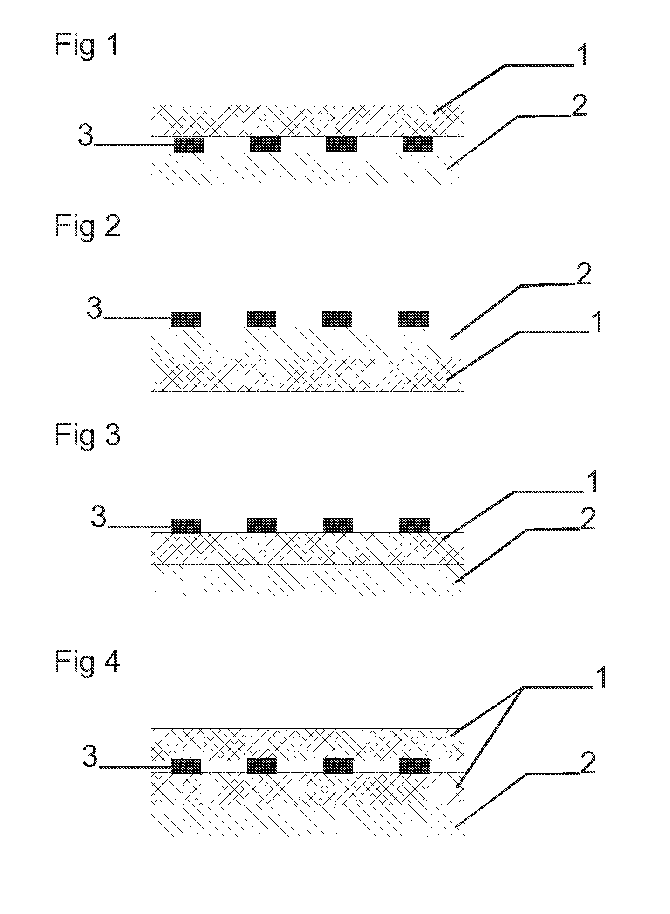

### Ausführungsbeispiel 1 (siehe Figur 1)

Der Druckmaschine wird über den Anleger ein bogenförmiges Drucksubstrat zugeführt, zum Beispiel ein Papier-, Karton oder Folienbogen, dieser Bedruckstoffbogen wird dann in der Bogenrotationsdruckmaschine mit mindestens einem Druckwerk mit einem Motiv bedruckt und anschließend auf den Bedruckstoffbogen unter Zuhilfenahme eines Haftvermittlers und / oder durch Druck eine Kaschierlage aufgebracht, die von einer Rolle abgewickelt wird, wobei die Kaschierbahn vor oder nach dem Transfer auf den Trägerbogen zumindest annähernd auf das Bogenformat durch eine Schneidvorrichtung geschnitten wird.

Die transferierte Kaschierfolie ist dabei vorzugsweise hoch transparent oder zumindest teiltransparent, damit das darunter liegende Druckbild erkennbar ist. Durch diese Vorgehensweise lassen sich hochwertig gestaltete Druckprodukte herstellen. Eine Hochglanzfolie erbringt einen Glanz, die eine Lackierung aufgrund der Oberflächenstörungen nur sehr erzielen kann. Mit der Kaschierung einer Mattfolie lassen sich exzellente Matteffekte erzielen, mit der Kaschierung von Folien mit optischen Linsen zum Beispiel 3D Effekte. Eine kaschierte Folie hat gegenüber der Lackierung den Vorteil, dass durch den geschlossenen Film das Druckprodukt gegenüber mechanischen und Umweltbelastungen deutlich besser geschützt ist.

Die kaschierte Lage verhindert bei geeigneten Barriereeigenschaften des Kaschiermaterials eine Abklatschmigration, die gekennzeichnet ist durch den Übertrag von Druckfarbenbestandteilen auf die Rückseite des auf des im Auslagestapel einer Bogendruckmaschine von der Oberseite des im Stapel unten liegenden Bedruckstoffbogens auf den im Stapel oben liegenden Bedruckstoffbogen. Durch die Vermeidung der Abklatschmigration lässt sich die Lebensmittelsicherheit der Verpackung deutlich erhöhen, da keine schädigenden Druckfarbenbestandteile durch die Abklatschmigration auf die Innenseite der Verpackung gelangen.

Durch die Kaschierung einer oben liegenden Lage lassen sich auch unter besonderen Umständen deutliche Energieeinsparungen erzielen. Als Beispiel hierfür sei die Dispersionslackierung angeführt. Die im Dispersionslack befindliche Lösemittel, meist Wasser, muss normalerweise unter hohem energetischem Aufwand aus der Lackschicht entfernt werden. Normalerweise werden hierfür Infrarot- und / oder Heißlufttrockner im Ausleger der Bogenrotationsdruckmaschine eingesetzt, die bei einer Folienkaschierung entfallen können. Auch können lange Trocknerstrecken in den Bogenrotationsdruckmaschinen entfallen, wodurch auch die Kosten des Maschinenbaus reduziert werden können.

Ein weiterer Vorteil des Versiegelns einer Druckfarbenschicht ergibt sich daraus, dass keine Abschmiergefahr der Druckfarben- respektive Lackschicht mehr besteht, wie es normalerweise im klassischen Druck besteht, da der kaschierte Film weniger berührempfindlich und trocken ist. Dadurch lassen sich aufwendige Bogenführungsmaßnahmen reduzieren.

### Ausführungsbeispiel 2 (siehe Figuren 3 und 4):

Der Druckmaschine wird über den Anleger ein bogenförmiges Drucksubstrat zugeführt, zum Beispiel ein Papier-, Karton oder Folienbogen, dieser Bedruckstoffbogen wird dann in der Bogenrotationsdruckmaschine mit einer Folienlage kaschiert und anschließend in mindestens einem Druckwerk mit einem Motiv bedruckt, wobei der Verbund aus Trägermaterial, Kaschierlage und Druckschicht anschließend gegebenenfalls durch eine Lackierung oder die Kaschierung einer zweiten Kaschierlage versiegelt werden kann.

Diese Vorgehensweise ermöglicht hervorragende Effekte, indem zum Beispiel eine optisch wirkende Schicht, z. B. eine metallisierte Folie, auf den Bedruckstoffbogen aufkaschiert und anschließend bedruckt wird. Durch den geschlossenen Film werden sehr hohe Glanzwerte erzielt.

Ein weiterer Vorteil ergibt es sich daraus, dass die Druckfarbenschicht durch die kaschierte Lage bei geeigneten Barriereeigenschaften die Migration von Druckfarbenbestandteilen durch den Bedruckstoff verhindert. Dies steigert die Sicherheit von verpackten Lebensmitteln dauerhaft gegenüber der Migration von Stoffen aus der Druckfarbenschicht durch den Packstoff in das Lebensmittel. Auch wird der die Verpackung wirkungsvoll gegenüber äußere Einflüsse geschützt.

### Ausführungsbeispiel 3: (Figur 2)

Eine wichtige Anwendung ist auch der Innenseitenschutz, bei dem die Verpackung von innen durch eine kaschierte Lage geschützt wird, während die gegenüberliegende Seite des Trägerbogens bedruckt und gegebenenfalls veredelt wird. Dies kann geschehen, indem der Verbund aus Trägerbogen und Kaschiermaterial vor der Bedruckung gewendet wird. Alternativ kann die Kaschierbahn auch von unten zugeführt werden.

Diese Anwendung hat den Vorteil, dass das verpackte Gut exzellent geschützt wird. Feuchtigkeit aus der Umwelt oder aus dem Verpackungsmaterial kann nicht auf das Füllgut übergehen. Migration von Druckfarbenbestandteilen oder Bestandteilen des Packstoffes auf das Füllgut sind bei geeigneten Barriereeigenschaften weitgehend ausgeschlossen.

### Ausführungsbeispiel 4:

Dadurch, dass es sich bei dem applizierten Material um einen Feststoff handelt, lassen sich in der Bogendruckmaschine durch eine Prägung in hervorragender Weise zusätzliche Effekte erzielen, die in klassischen Druckverfahren nur eingeschränkt möglich sind. So lassen sich durch Prägung Matt-/Glanzeffekte mit einer hervorragenden Differenzierung zwischen den Glanzbereichen erzielen. Durch die Prägung von Holgramm- oder anderen Beugungsstrukturen lassen sich besondere optische Effekte, aber auch Sicherheitselemente herstellen. Die Prägung kann zum Beispiel in einem Lackwerk einer Bogenrotationsdruckmaschine erfolgen. Solche Prägungen stellen - neben dem optisch wirkenden Effekt - einen hohen Sicherheitsstandard dar, da durch die Inline-Kombination diese fast nicht nachahmbar sind. Prägungen können auch so klein sein, z. B. als Nanostruktur, dass sie nur mit speziellen Instrumenten erkennbar sind.

### Ausführungsbeispiel 5:

Vorteilhaft ist es auch die kaschierte Lage bildmäßig selber zu strukturieren. Dies kann bei der Herstellung der Kaschierfolie oder in einem separaten Aggregat vor dem Applizieren auf das Trägermaterial erfolgen. Die bildgemäße Strukturierung kann durch den Druck von Strukturen, z. B. Nanotext, oder durch eine mechanische Behandlung oder Modifikation der Kaschierfolie, z.B. durch Prägen, erfolgen. Die Folie kann auch holografische Strukturen oder andere Licht beugende Strukturen tragen. Vorteilhaft sind diese bildhaften Strukturen auf der Seite der Kaschierfolie aufgebracht, die nach dem Kaschiervorgang gegen die Oberfläche des Trägermaterials gerichtet ist.

Durch eine solche Oberflächenmodifikation lassen sich fast nicht fälschbare Sicherheitsmerkmale für Verpackungen gestalten.

Die Verbindung zwischen den Lagen kann durch einen Dispersionskleber, ein Zwei-Komponentenkleber, der direkt vor dem Auftrag gemischt wird, einen aktivierbaren Kleber, zum Beispiel eine Anfeuchtgummierung, die durch Wasser oder Wasserdampf aktiviert wird, oder einen Haftvermittler, der über ein Druckwerk aufgetragen wird, ähnlich wie in dem Kaltfolientransferverfahren, einem 100% Klebstoffsystem, das thermisch und / oder radikalisch oder kationisch härtend ist, haftfest erzeugt werden. Der Haftvermittler kann dabei vor dem Kaschiervorgang auf die Laminierfolie und / oder auf den Trägerbogen aufgetragen werden. Der Auftrag auf die Laminierfolie kann durch ein Walzenauftragswerk, eine Sprühvorrichtung oder eine andere geeignete Vorrichtung zum Auftrag des Haftvermittlers erfolgen. Der Auftrag auf den Trägerbogen kann durch ein Druckwerk, zum Beispiel ein Offsetdruckwerk, ein Lackwerk, eine Walzenauftragsvorrichtung, ein Sprühwerk oder eine andere geeignete Vorrichtung erfolgen.

In einem besonderen Verfahren wird auf den Trägerbogen 2 eine erste Komponente eines Zwei-Komponenten Klebesystems und auf die Kaschierfolie 1 die andere Komponente eines Zweikomponentensystems aufgetragen. In dem Pressspalt erfolgen dann ein Kontakt und eine Durchmischung der beiden Komponenten, die zur Härtung und Anhaftung von Trägerbogen 2 und Kaschierfolie 1 führt.

Das erfindungsgemäße Verfahren kann weitere Schritte aufweisen:
a) Das Kaschiermaterial kann vor oder nach dem Transfer auf den Trägerbogen durch eine Tintenstrahl-, einem Tonerdruckverfahren oder einer Laserdruck- oder Beschriftungsvorrichtung mit statischem und / oder variablen Daten und Informationen beschriftet werden.
b) Während des Drucklaufs durch die Bogenrotationsdruckmaschine kann zunächst der Trägerbogen mit einem Kaschiermaterial kaschiert bzw. laminiert werden. Erst danach kann die Laminierung überdruckt, und gegebenenfalls mit weiteren Veredelungsschritten bearbeitet werden.
c) Während des Drucklaufs durch die Bogenrotationsdruckmaschine kann auch erst der Trägerbogen bedruckt und anschließend mit einem Kaschiermaterial kaschiert bzw. laminiert werden. Auch dann können gegebenenfalls weitere Veredelungsschritte durchgeführt werden.
d) Während des Drucklaufs durch die Bogenrotationsdruckmaschine kann auch zunächst der Trägerbogen auf der Rückseite mit einem Kaschiermaterial kaschiert und anschließend die Vorderseite überdruckt werden. Hierzu ist eine Bogenwendung zwischen beiden Bearbeitungsschritten notwendig. Auch hier können gegebenenfalls weitere Veredelungsschritte folgen.
e) Die Verarbeitungsschritte zum vor- oder rückseitigen Bedrucken, zum Kaschieren bzw. Laminieren und zum Veredeln bei der Herstellung des Druckproduktes können im Übrigen auch in einer beliebigen Reihenfolge und Kombinationen zueinander erfolgen.

### Bezugszeichenliste

- 1: kaschierte Lage / Schicht
- 2: Trägerbogen
- 3: Druckfarbenschicht

## Patentansprüche

1. Verfahren zur Herstellung eines Druckproduktes bestehend aus mindestens einem bogenförmigen Trägermaterial, wie Papier-, Karton- oder Kunststofffolienbogen, mindestens einer bildmäßig strukturierten Druckschicht, und einer großflächig auf mindestens einer Seite des Trägermaterials kaschierten oder laminierten geschlossenen Folienlage, wie aus einer Kunststofffolie, einer Metall- oder Verbundfolie, **gekennzeichnet dadurch,**
**dass** das Trägermaterial über den Anleger einer Bogenrotationsdruckmaschine der Bogenrotationsdruckmaschine zugeführt wird und der Kaschiervorgang bzw. die Kaschiervorgänge in der Bogendruckmaschine und der Druckvorgang bzw. die Druckvorgänge in den Druckwerken der Bogenrotationsdruckmaschine während des Durchlaufs durch die Druckmaschine inline erfolgen, wobei das Kaschiermaterial als Bahnmaterial der Druckmaschine zugeführt und vor oder nach dem Kaschieren durch eine Trennvorrichtung auf annäherndes Bogenformat des Trägermaterials gebracht und die Abschnitte des Kaschiermaterials vollständig oder annähernd vollständig mit dem Trägermaterial haftfest verbunden und am Ausleger oder einer anderen Auslegevorrichtung der Bogendruckmaschine ein Verbundmaterial, bestehend aus dem Trägermaterial, mindestens einer Druckschicht und mindestens einer kaschierten Folienlage, ausgelegt wird, wobei das Kaschiermaterial mit den weiteren Lagen wahlweise mittels eines Haftvermittlers verbunden wird.

2. Verfahren nach Anspruch 1, **gekennzeichnet dadurch, dass** der Haftvermittler durch eine Auftragvorrichtung, wie ein Druckwerk, Lackwerk, Düsenvorrichtung oder Walzenwerk, auf das Trägermaterial und / oder das Kaschiermaterial vor dem Zusammenführen von Trägermaterial und Kaschiermaterial großflächig aufgetragen wird.

3. Verfahren nach Anspruch 1 oder 2, **gekennzeichnet dadurch, dass** das Kaschiermaterial mit einem aktivierbarem Haftvermittler beschichtet ist, dessen Aktivierung vor oder während dem Kaschiervorgang im Pressspalt erfolgt.

4. Verfahren nach Anspruch 3,
**gekennzeichnet dadurch, dass** der aktivierbare Haftvermittler durch Feuchte aktivierbar ist und die Aktivierung durch das Auftragen von Feuchtigkeit in Form einer Flüssigkeit oder in gasförmiger Phase erfolgt.

5. Verfahren nach Anspruch 1 bis 2, **gekennzeichnet dadurch, dass** der Haftvermittler ein Zweikomponentensystem ist und dass
- die Durchmischung der beiden Komponenten unmittelbar vor dem Auftrag auf den Trägerbogen und / oder dem Kaschiermaterial erfolgt oder dass
- eine Komponente des Klebstoffsystems auf das Kaschiermaterial und die andere Komponente des Klebstoffsystems auf den Trägerbogen aufgetragen wird und die beiden Komponenten des Zweikomponentenklebstoffsystems im Pressspalt miteinander in Kontakt kommen und durchmischt werden.

6. Verfahren nach Anspruch 1 bis 5, **gekennzeichnet dadurch, dass** das Klebstoffsystem zur Verbindung der Lagen ein nahezu lösemittelfreies 100%-Klebstoffsystem ist, und dass das 100%-Klebstoffsystem ein radikalisch oder kationisch härtendes, oder ein Dual-Cure-System ist, welches gleichzeitig radikalisch oder kationisch und thermisch härtend ist
und dass die Polymerisation des Haftvermittlers zumindest teilweise durch Einwirkung von UV-Strahlung oder Elektronenstrahlen erfolgt und die Bestrahlung des Haftvermittlers durch die Kaschierfolie hindurch erfolgt oder dass der Wärmeintrag durch IR-Strahlung und/oder durch eine oder mehrere beheizte Presswalze/n erfolgt.

7. Verfahren nach Anspruch 1, **gekennzeichnet dadurch, dass** das Kaschiermaterial ein thermoplastisches Material ist, das unter Einwirkung von Wärme auf das Trägermaterial ohne Einsatz eines Haftvermittlers auflaminiert wird, wobei das Kaschiermaterial vor dem Auftragen auf das Trägermaterial durch geeignete Vorrichtungen direkt (berührend) oder indirekt (nicht berührend) erwärmt wird.

8. Verfahren nach Anspruch 6 oder 7, **gekennzeichnet dadurch, dass** der Wärmeeintrag mittels wenigstens einer Presswalze erfolgt und dass mindestens eine Presswalze im Pressspalt beheizt wird.

9. Verfahren nach Anspruch 1 bis 8, **gekennzeichnet dadurch, dass** das Kaschiermaterial eine bildmäßige Bedruckung und / oder Strukturierung aufweist und / oder dass das Kaschiermaterial eine Prägung oder eine Oberflächenstruktur aufweist,
wobei die Prägung in die Kaschierfolienbahn vor dem Übertrag auf das Trägermaterial durch eine Prägevorrichtung, wahlweise unter Einsatz von Wärme, oder eine Beschriftung oder Strukturierung durch eine oder mehrere Laservorrichtungen erfolgt.

10. Verfahren nach Anspruch 9, **gekennzeichnet dadurch, dass** nach Übertragung des Kaschiermaterials auf das Trägermaterial die Prägung oder Strukturierung des Kaschiermaterials sich auf der dem Trägermaterial zugewandten Seite befindet.

11. Verfahren Anspruch 9 bis 10, **gekennzeichnet dadurch, dass** nach dem Transfer der Kaschierfolie auf den Trägerbogen in dem Pressspalt in einem weiteren Arbeitsschritt der Verbund aus Trägerbogen und Kaschierfolie oder nur die Kaschierfolie partiell oder flächig eine Prägung oder Oberflächenstrukturierung in einem Pressspalt oder einem Prägewerk erfährt.

12. Druckprodukt, bestehend aus mindestens einem bogenförmigen Trägermaterial, zum Beispiel einem Papier-, Karton- oder Kunststofffolienbogen, mindestens einer bildmäßig strukturierten Druckschicht, und einer großflächig auf mindestens einer Seite des Trägermaterial kaschierten oder laminierten geschlossenen Folienlage, zum Beispiel bestehend aus einer Kunststofffolie, einer Metall- oder Verbundfolie, **gekennzeichnet dadurch,**
**dass** das Trägermaterial bogenförmig ist, wobei es über einen Anleger einer Bogenrotationsdruckmaschine zugeführt wird, dass das Trägermaterial mit einer oder mehreren Deckschichten versehen ist, wobei ein Kaschiervorgang bzw. weitere Kaschiervorgänge in der Bogendruckmaschine und ein Druckvorgang bzw. weitere Druckvorgänge in den Druckwerken der Bogenrotationsdruckmaschine während eines einzigen Durchlaufs durch die Druckmaschine inline erfolgen, dass das Kaschiermaterial ein bahnförmiges Material ist, wobei es der Druckmaschine zugeführt und vor oder nach dem Kaschieren durch eine Trennvorrichtung auf annäherndes Bogenformat des Trägermaterials gebracht wird und vollständig oder annähernd vollständig mit dem Trägermaterial haftfest verbunden wird, und dass das Trägermaterial, mindestens einer Druckschicht und mindestens einer kaschierten Folienlage ein Verbundmaterial bilden, wobei das Verbundmaterial am Ausleger oder einer anderen Auslegevorrichtung der Bogendruckmaschine auslegbar ist.

13. Druckprodukt nach Anspruch 12, **gekennzeichnet dadurch, dass** das Verbundmaterial eine bildmäßige Bedruckung und / oder Strukturierung aufweist und / oder eine Prägung und / oder eine Oberflächenstruktur aufweist.

14. Druckprodukt nach Anspruch 12 bis 13, **gekennzeichnet dadurch, dass** das Kaschiermaterial des Verbundmaterials Barriereeigenschaften gegen Fett und / oder Feuchtigkeit und / oder Wasserdampf und / oder gegen die Migration von Druckfarbenbestandteile aufweist und/oder dass das Kaschiermaterial des Verbundmaterials ein thermoplastisch verformbares Material ist.

15. Druckprodukt nach Anspruch 12 bis 14, **gekennzeichnet dadurch, dass** das Verbundmaterial durch eine Tintenstrahl-, einem Tonerdruckverfahren oder einer Laserdruck- oder Beschriftungsvorrichtung erzeugte statische und/oder variable Daten und Informationen aufweist, wobei die Daten und Informationen auf das Kaschiermaterial vor oder nach dem Transfer auf das Trägermaterial aufgebracht sind.
